# EUROPEAN PATENT SPECIFICATION

(11) **EP 1 607 699 B1**
(45) Date of publication and mention of the grant of the patent: **14.05.2008**
(21) Application number: 04425426.6
(22) Date of filing: 10.06.2004
(51) Int. Cl.: F25B 41/06, F25B 47/02

(54) **Refrigeration plant**
Kälteanlage
Appareil frigorifique

(43) Date of publication of application: 21.12.2005
(73) Proprietor: Micheletti Impianti S.R.L., 00179 Roma (IT)
(72) Inventor: Barsanti, Emidio, 00179 Roma (IT)
(74) Representative: Sarpi, Maurizio

(56) References cited:
- EP-A- 1 293 243
- GB-A- 2 328 270
- US-A- 5 867 998
- US-A- 6 006 544
- US-A1- 2003 217 558
- US-A1- 2004 000 153
- US-A1- 2004 068 999

## Description

The present invention relates the field of the refrigeration plants or systems, with particular - but not exclusive - reference to those of middle-great dimensions.

More specifically, it concerns substantially a refrigeration plant having a flow regulation valve without metering orifice of limitation of flow.

Currently, several typologies of refrigeration plants are known, wherein expansion valves provided with metering orifice are employed.

The invention refers to a solenoid valve without orifice which is periodically energized (opened) and de-energized (closed) by a control system that, in response to some parameters of the refrigeration plant (e.g. overheating), varies the ratio between the energizing time (opening) and the de-energizing time (closing) of the solenoid valve during each period of operation of the valve so that to regulate the flow of refrigerant that goes through the valve itself.

Typically, a refrigeration plant includes a compressor, a condensing coil and a evaporating coil. Refrigerant vapor is compressed to high pressure by the compressor and supplied to the condenser where the high pressure refrigerant vapor is condensed to a high pressure liquid. An expansion valve is provided between the condenser and the evaporator so that the liquid refrigerant from the condenser can be adiabatically expanded before entering in the evaporator. In the latter, the low pressure refrigerant absorbs heat from the surrounding environment and it is transformed, at least partially, in a vapor which returns to the inlet of the compressor through a suction line. In many conventional refrigeration systems, the expansion valve is a so-called thermostatic expansion valve. The common thermostatic expansion valve, as for instance the known "Danfoss TE2" model, has an expansion port therein with a metering orifice and a valve member to regulate the flow of refrigerant through the expansion port. A spring biases the valve member toward its closing position, and it is provided a diaphragm actuator having a side of the diaphragm exposed to the pressure of the suction gas while the other side is connected, through a capillary pipe, to a thermostatic bulb which exchanges heat with the refrigerant vapor (also called "suction gas") exhausted by the evaporator. The bulb, which is loaded with a suitable volatile fluid (e.g. a refrigerant), exerts a pressure force on the valve member on the diaphragm actuator opposing the force of the spring and the pressure of the suction gas. When the thermostatic bulb detects an increase in the suction gas temperature with respect to its pressure, the clean pressure force exerted on the diaphragm actuator is correspondingly increased, thereby obtaining to increase the opening of the valve so as to allow to a greater quantity of refrigerant to flow through the evaporator, resulting in a drop in temperature of the suction gas. Following the detection of a diminution in the suction gas temperature by the thermostatic bulb, the latter decreases the pressure force exerted on the diaphragm actuator and thereby allows the spring to close at least partially the valve, reducing the flow of refrigerant in the evaporator and, in turn, increasing the temperature of the suction gas. In this way, the expansion valve regulates the overheating at the evaporator outlet, the overheating being defined as the difference between the temperature of the refrigerant vapor and the temperature of a saturated vapor of the same refrigerant to the same pressure.

The expansion valves of known type have generally the following limitations:
A. To get the maximum efficiency from the evaporator, an overheating near to zero at the evaporator outlet would be desirable, but such known valves, with values of the overheating smaller than about 4÷6°C, are normally not able to carry out suitable regulations, causing a decrease of efficiency of the evaporator between 5 to 10%.
B. When the flow of refrigerant through the valve of expansion is smaller than about 50% of the valve full opening flow capacity, the valve starts to swing between excessive opening and excessive closing, leading to a reduced efficiency of the refrigeration system and to dangerous refrigerant liquid feeding to the compressor inlet. Usually, in order to avoid these swings, the maximum valve capacity is reduced but in this way the refrigeration system cannot operate at its maximum capacity and efficiency in every operating condition.
C. In the currently known refrigeration systems, with air cooled condenser, during the winter operation the pressure at the condenser drops, so reducing the valve flow capacity below acceptable limits. The common solution is to limit the air flow to the condenser by switching off some of the condenser fans so as to ensure that the refrigerant pressure is not less than 8÷12 bars. It should be noted that at a lower condenser pressure, the refrigeration system would have a higher capacity and a lower power consumption, but this condition is not allowed by the thermostatic valve intrinsic limitation.
D. The gaseous phase of the refrigerant entering into the expansion valve limits the flow through the metering orifice which is normally calculated for refrigerant completely in liquid phase. To avoid such limitation, the connection to the valve is generously oversized and the quantity of refrigerant in the system is greater than the amount that would be otherwise necessary. Often a liquid receiver is also installed between the condenser and the expansion valve: the additional refrigerant in the receiver compensates possible variations in the operating conditions of the refrigeration system. The providing of the compensating receiver leads to a further increase of the total quantity of refrigerant. Furthermore, the presence of a receiver having a capacity greater than a certain value imposes the observance of onerous and restrictive regulations, particularly of the European Union (such as the 97/23/CE, also known as PED).
E. During the winter operation, the value of the pressure at the condenser usually results lower than the values of the pressure of the other periods of the year and in order to avoid that refrigerant in gaseous phase being supplied to the expansion valve, a quantity of refrigerant greater than that really necessary has to be provided in the plant. Thus, the pressure at the condenser should be maintained over to a certain value otherwise it must be furnished a greater quantity of refrigerant.

Some of said drawbacks have been overcame by adopting thermostatic expansion valves electronically controlled.

The patent US4112703, discloses an electromechanical valve working also as expansion device in the refrigeration circuit, wherein the refrigerant expands while it flows through the valve, going out of the valve in the form of a two-phase mixture of liquid and gas in which the preponderant phase is the liquid phase.

The valve is used for furnishing a varying orifice correspondingly to the applied control.

In the patent US4459819 it is disclosed a simple solenoid valve provided with a metering orifice intended to limit the flow of the refrigerant. In this case, the solenoid is periodically activated and de-activated to control the flow of refrigerant in response to the overheating of the refrigerant at the evaporator outlet.

The expansion valve known with the commercial name of "Danfoss AKV" is conceptually similar to the patent US4459819: in substance, it concerns a solenoid valve incorporating a metering orifice which is activated every six seconds and subsequently deactivated after a suitable time calculated by a proportional, differential and integral electronic controller.

The patent DE3419666 discloses the same simple solenoid incorporating a metering orifice, used as expansion valve for air conditioning for generic use and for heat pumps.

In all these valves the refrigerant liquid reaches the valve inlet and therefore it expands while it is flowing through of it. Thus, these electronically controlled valves replicate the function of the traditional expansion valve, improving the precision of the regulation of the overheating and widening the range of flow capacity with respect to that of the traditional expansion valves. These electronically controlled valves overcome the limitations previously listed as A, B and C, but don't overcome the limitations listed as D and E.

To such intention, it should be noted that since common refrigerants of the HFCs type cause greenhouse effect, it would be extremely advantageous to reduce the quantity of refrigerant required for the good operation of a refrigeration plant. Furthermore, the use of a reduced quantity of refrigerant would also allow the elimination of the liquid receiver, whose presence often involves, as already said, heavy burdens under the regulations point of view for the certification and the management of the plant itself.

It is known, from US-A-6006544, a refrigeration apparatus comprising an improved expansion device made by a capillary not subject to clogging.

It is also known, from GB-A-2328270, an air conditioner having a plurality of capillary tubes connected selectively, wherein a refrigeration cycle is carried out with a fixed quantity of refrigerant regardless of the length of the piping. To this aim, the capillary tubes are the expansion devices and they are selected to compensate different piping length due to the variable installation distance among the indoor and outdoor unit of the air conditioner, without having to modify the refrigerant quantity.

Furthermore, it is known, from EP-A-1293243, a control system for compressed gas refrigeration dryers with at least one refrigeration cycle. Such refrigeration system comprises at least one lamination unit, i.e. an expansion device, made by at least a capillary tube and or by a thermostatic valve. Such control system is provided with expansion devices and with capillary tubes limiting the cooling capacity.

It is clear that all the technical solutions disclosed in US-A-6006544, GB-A-2328270, EP-A-1293243 are provided with an expansion device comprising at least a capillary tube in which the working fluid (refrigerant) undergoes an expansion.

Notwithstanding this, the known refrigeration systems do not satisfactorily overcome these problems. up to now, in fact, the needing to feed the expansion valve with completely liquid refrigerant, combined with the flow resistance through said valve, involves the needing to provide some pipelines between the condenser and the expansion valve having big dimensions and to use considerable quantities of refrigerant, which often imposes the necessity to install a liquid receiver.

On the other hand, the combined functions of expansion and of flow control in the same valve has prevented to overcome the limitations previously listed as D and E.

The present invention provides a refrigeration plant according to claim 1.

According to a further peculiar characteristic of the invention, a pipeline for the refrigerant which is in warm gaseous-state is provided between the compressor outlet and the evaporator inlet. To sum up, this pipeline that by-passes the condenser and the regulation valve, is controlled by an additional solenoid valve with the purpose to carry out the defrosting and the heating of the evaporator.

It is useful to observe that, according to the present invention, said regulation solenoid valve without metering orifice can be constituted by a common refrigerant solenoid valve (as the EVR of the Danfoss), that is advantageously more cheap than an solenoid expansion valve having a metering orifice (as the AKV of the Danfoss).

Advantageously, said lacking of metering orifice allows to avoid the installation of a liquid receiver in many situations for which it would be necessary to use a solenoid expansion valve with metering orifice.

Furthermore, according to the present invention, the size of the pipeline between the condenser and the evaporator can be reduced, because a relevant part of the expansion happens in the same pipeline, thereby further reducing the total quantity of refrigerant needed by the plant. Advantageously, compared to a similar plant provided with traditional expansion valve with metering orifice and with a liquid receiver, a reduction up to 80% of the total quantity of needed refrigerant is obtained.

A better understanding of further purposes and advantages of this invention will result from the following detailed description with reference to the accompanying drawings that show a preferred embodiment thereof only by way of a not limiting example.

In the drawings:

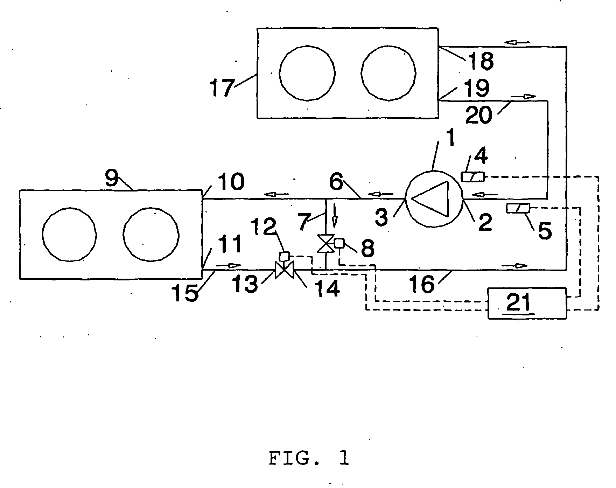

figure 1 schematically shows the main components of a refrigeration plant, for instance of the semi-hermetic type with hot-gas defrost, to refrigerate a cold-room.

In this embodiment, the outlet 3 of the semi-hermetic compressor 1 is connected to the inlet 10 of the condenser 9 through a pipeline 6. The outlet 11 of the condenser 9 is connected to the inlet 13 of the solenoid regulation valve 12 through a pipeline 15.

The solenoid valve 12 is preferably placed near to the outlet of the condenser 11 or near to the inlet of the compressor 1, with the advantage to simplify the installation and to facilitate the maintenance.

The outlet 14 of the valve 12 is connected to the inlet 18 of the evaporator 17 through a pipeline 16, while the outlet 19 of the evaporator 17 is connected to the inlet 2 of the compressor 1 through the pipeline 20.

Relating to the above mentioned pressure and temperature probes, the pressure probe 4 is preferably connected to the low pressure cap of the compressor 1, while the temperature probe 5 is preferably positioned in contact with the low part of the pipeline 20 immediately before the inlet 2 of the compressor 1. Finally, the hot gas bypass pipeline 7 connects the high-pressure pipeline 6 outgoing from the compressor 1 with the pipeline 16 downstream the regulation valve 12, by means of the hot gas solenoid valve 8.

The electronic controller 21 calculates with a microprocessor the overheating of the refrigerant entering in the compressor 1, by using the information coming from the pressure and temperature probes 4 and 5.

During refrigeration working, the hot gas valve 8 is kept close (off) and the desired overheating is kept and controlled by switching off and on the solenoid regulation valve 12.

The driving of said regulation valve 12 provides that it is completely opened (ON) regularly every N seconds, and kept in such configuration for a variable time ("ON time") from 0 to N seconds, to get the desired overheating. For instance, if N=10, the valve is opened every 10 seconds and is closed after an interval of time that can vary from 0 to 10 seconds. It has to be noted that the value of said intervals of time is not obligatorily an integer, but it can also be fractional.

When the refrigeration plant is started for the first time, the "ON time" is firstly fixed to an interval of about 2 seconds, then it is gradually increased or decreased by the controller to control the overheating, preferably by means of a proportional, integral and /or differential control method.

It is useful to note that, since it is not installed any metering orifice in the regulation valve 12, in case of some abrupt variations of the operational conditions of the refrigerator plant will occur during operation and/or during the filling operations of refrigerant, it will be very difficult for the overheating control method to managing the flow of refrigerant. In fact, when the overheating is too low, there is the risk that some liquid refrigerant enters into the inlet 2 of the compressor 1 and damages the compressor itself; while when the overheating is too high, the pressure at the compressor inlet 2 can go below the external atmospheric pressure and, in case of leaking of the circuit, a bit of air and/or water vapor could enter into the refrigeration plant.

To obviate to such drawbacks, additionally to said control method, it can be provided that when the overheating falls below a preset value of "minimum overheating", for instance of about 4°C, the electronic controller 21 closes immediately the regulation valve and delays the subsequent opening of the valve until the overheating increases over said minimum overheating value. Correspondingly, when the overheating increases over a preset value of "maximum overheating", for instance of about 12°C, the controller 21 anticipates immediately the opening of the regulation valve if such valve is in its closed configuration, maintaining open the valve until the overheating is decreased below the preset maximum value.

To carry out the defrosting and the heating of the evaporator, the regulation valve 12 is maintained closed and the hot gas valve 8 is opened, while the compressor 1 is on, thereby supplying hot gas to the evaporator 17 without by-passing the inlet 18 to the evaporator. In order to prevent the liquid from returning to the inlet 2 of the compressor 1, during the defrosting and the heating the controller 21 monitors the value of the overheating at the compressor and, when such overheating is below a preset value, for instance of about 4°C, it closes the hot gas valve 8 until the preset minimum value of the overheating is reached again.

Furthermore, please note that since there is no liquid receiver installed, during the defrosting and the heating the refrigerant in liquid phase accumulates in the condenser 9 which is partially flooded. Advantageously, such flood of the condenser facilitates the increase of its inner pressure helping the flow of refrigerant to overcome the natural flow resistance of the circuit.

All the components of the refrigeration system can be designed according to traditional methods, with exception of the regulation valve 12 and of the pipeline 15 and 16, respectively upstream and downstream of such valve.

A simple and approximate method for designing the pipeline 15 and 16 now mentioned is the following. The project operating conditions of the refrigeration system are fixed and the refrigerant overheating (OverHeating) at the inlet 2 of the compressor, that in the following will be indicated as OH, is fixed to a desired value OH₀. Then the refrigeration plant is ideally gradually filled with refrigerant and the regulation valve 12 is ideally maintained open until the overheating OH drops to OH₀. There are three possible cases:
C_. The pipeline 15 and 16 are so small that refrigerant completely liquid starts to outflow from the outlet 11 of the condenser 9 but the flow resistance of the pipeline it is so high that OH is still greater than OH₀. The further filling of refrigerant simply floods the condenser 9 resulting in a small improvement of the overheating.
Co. The pipelines 15 and 16 are correctly designed. In this case, when some completely liquid refrigerant starts to outflow from the outlet 11 of the condenser 9, the overheating OH is exactly equal to OH₀, therefore the capacity and the efficiency of the refrigeration plant are exactly as desired.
C₊. The pipelines 15 and 16 are so big that, before that completely liquid refrigerant starts to outflow from the outlet 11 of the condenser 9, the overheating OH is already equal to OH₀. This involve that part of the refrigerant from the outlet 11 of the condenser 9 is gaseous and consequently the capacity and the efficiency of the refrigeration system are reduced, since the gaseous part does not undergo evaporation during the refrigeration cycle. If the efficiency is the main concern, the quantity of refrigerant can be increased until completely liquid refrigerant outflows from the outlet 11 of the condenser 9, allowing the regulation valve 12 to be activated/deactivated for controlling the flow of the fluid in order to maintain the desired overheating.

However, it is should be observed that in the known refrigeration systems the density of the refrigerant gaseous phase is so small with respect to the liquid phase that a remarkable volume of gas can be allowed at the outlet 11 of the condenser 9.

For designing the above mentioned pipelines 15 and 16 in the C₀ case the well known calculation methods of the pipelines flow resistance can be used. Nevertheless, it is useful to note that this type of sizing is not applicable where the pipeline length is not already known "*a priori*"*,* as it happens for the cold rooms installations where the locations of the compressor 1, of the condenser 9 and of the evaporator 17 are decided during the on site installation. To overcome this difficulty the pipelines can be oversized with a safety margin as in the C₊ case.

During the real operation of a refrigeration plant, the natural flow resistance between the outlet 11 of the condenser 9 and the inlet 18 of the evaporator 17 can be smaller than required and consequently, if the regulation valve 12 would be completely open, an excessive quantity of refrigerant would be furnished to the evaporator, thereby resulting in an insufficient overheating (too low). For this reason the regulation valve 12 is activated and deactivated for limiting the flow of refrigerant and to obtain the desired overheating. A bigger regulation valve 12 has a smaller flow resistance when it is completely open and it allows a greater flow resistance in the pipelines 15 and 16, thereby reducing the quantity of refrigerant which is really necessary to the plant itself.

Therefore, the sizing of the regulation valve appears rather simple. However, it should be noted that said sizing it is limited by the costs and by practical reasons. A common on-off solenoid valve without metering orifice (as the EVR Danfoss), used as regulation valve, is advantageously simple, reliable and cheap with respect to more sophisticated valves. However, according to the present invention, it is possible to use - as regulation valve 12 - whatever valve which can be electrically opened and closed or which can be modulated in whatever manner within a reasonable time (order of magnitude of 10 seconds), to obtain refrigerant flow regulation, provided that said valve - at the maximum opening - doesn't have metering orifice.

From the above it is clear that the main function of said valve 12 is to regulate the refrigerant flow in order to get the desired working conditions and not that to expand the refrigerant fluid.

According to the invention, said valve without metering orifice is characterized by its own natural flow resistance and it does not provide any other flow limitation device when said valve is completely open. Part of the refrigerant that is furnished to said valve is already in a gaseous form when said valve it is completely open, while the expansion of said refrigerant occurs primarily in the part of pipeline between the condenser and the evaporator.

Although the regulation valve 12 can be sized to perform a remarkable part of the expansion, this sizing would be deleterious since it would determine a flow resistance through the valve itself, thereby reducing acceptable flow resistance through the pipelines 15 and 16, increasing the quantity of refrigerant needed by the plant.

A refrigerant which can be used in the plant herein disclosed is, for instance, a HFC as the R134a or the R404A or the R407A or the R410A or the R507A.

To summarize, the regulation valve 12 without metering orifice is preferably an on/off direct controlled solenoid valve. The valve is preferably energized (open) and de-energized (close) as a function of a parameter of the refrigeration system (e.g. the overheating), in such a way that the ratio between the energizing time and the de-energizing time during every period of operation of the valve is varied in response to the system parameter(s) and in such a way that the on/off solenoid valve works as a modulated refrigerant flow control expansion valve.

The system has a quantity of refrigerant strongly reduced. In most conditions, the circuit does not need any liquid receiver and the hot-gas defrost can be performed without by-passing the distributor of the evaporator.

The present invention has been described and illustrated according to a preferred embodiment thereof, however, it should be understood that those skilled in the art can make equivalent modifications and/or replacements without departing from the scope of the present industrial invention.

## Claims

1. Refrigeration plant comprising a compressor
(1) having an inlet (2) and an outlet (3), a condenser (9) connected to the outlet of the compressor (1), an evaporator (17) connected to the condenser (9) and to the inlet (2) of the compressor (1), and a refrigerant flow regulation valve (12) provided between the condenser (9) and the evaporator (17) said regulation valve (12) has no metering orifice through which the refrigerant fluid could be expanded and, when said regulation valve (12) is completely open, it has only its natural flow resistance said condenser (9) furnishes a high pressure refrigerant fluid to the regulation valve (12) which is constituted by a solenoid valve having solenoid actuator that, when is activated (energized), moves a valve member in its open position while when said actuator is de-activated (de-energized) it allows the valve member to return in its closed position; solenoid actuator is periodically activated/de-activated by a suitable electronic controller (21) in order to regulate the refrigerant flow through the regulation valve (12) as a function of the desired refrigerant overheating at the outlet of the evaporator (17), **characterized in that** said regulation valve (12) being completely opened (ON) regularly, every N seconds, and maintained in such configuration for a variable time, called "ON time", from 0 to N seconds, to obtain the desired overheating of the evaporator (17), when the plant is started for the first time, the "ON time" being initially fixed to an interval of about two seconds, after which it is gradually increased or decreased by the controller (21) to control the overheating, preferably with a proportional, integral and/or differential control method, while in the case of some abrupt variations of the operational conditions of the refrigerator plant according during operation and/or during the filling operations of refrigerant, when the overheating increases over a preset value of "maximum overheating", the controller (21) anticipates immediately the opening of the regulation valve if the latter is in closed configuration, said valve (12) not providing any other flow limiting device; part of the refrigerant that is furnished to said regulation valve (12) being already in gaseous form when said valve is completely open, a remarkable part of the refrigerant expansion being performed in a part of pipeline (15, 16) between the condenser (9) and the evaporator (17).

2. Refrigeration plant according to the preceding claim, **characterized by** the fact that said electronic controller (21) analyzes and elaborates the signals coming from a pressure probe (4) and from a temperature probe (5) which are positioned between the outlet (19) of the evaporator (17) and the inlet (2) of the compressor (1).

3. Refrigeration plant according to one of the preceding claims, **characterized by** the fact that a hot gas refrigerant fluid pipeline (7) is provided between the outlet (3) of the compressor (1) and the inlet (18) of the evaporator (17); said pipeline (7), which by-passes the condenser (9) and the regulation valve (12), being controlled by an additional solenoid valve or hot gas valve (8) in order to carry out the defrosting and the heating of the evaporator (17).

4. Refrigeration plant according to the preceding claim, **characterized by** the fact that the hot gas valve (8) is maintained closed (OFF) during the operation in refrigeration, and the desired overheating of the evaporator (17) is maintained and controlled by disarming (i.e. closing) and activating (i.e. opening) the regulation solenoid valve (12).

5. Refrigeration plant according to the preceding claim, **characterized by** the fact that, since the regulation valve (12) lacks of any metering orifice, in the case of some abrupt variations of the operational conditions of the refrigerator plant will occur during operation and/or during the filling operations of refrigerant, when the overheating falls below a preset value of "minimum overheating" the electronic controller (21) closes immediately the regulation valve (8) and delays the subsequent opening of the valve until the overheating increases over said minimum overheating value.

6. Refrigeration plant according to the claim 3, **characterized by** the fact that to carry out the defrosting and the heating of the evaporator (17), the regulation valve (12) is maintained closed and the hot gas valve (8) is opened, while the compressor (1) is on, thereby supplying hot gas to the evaporator (17) without by-passing its inlet (18).

7. Refrigeration plant according to one of the preceding claims
**characterized by** the fact that in order to prevent the liquid from returning to the inlet (2) of the compressor (1), during the defrosting and the heating the controller (21) monitors the value of the overheating at the compressor and, when such overheating goes down below of a preset value, it closes the hot gas valve (8).

8. Refrigeration plant according to one of the preceding claims, **characterized by** the fact that said refrigerant is a HFC as the R134a or the R404A or the R407A or the R410A or the R507A.

## Patentansprüche

1. Kühlanlage mit einem Kompressor (1), welcher einen Einlass (2) und einen Auslass (3) aufweist, einem Kondensator (9), welcher mit dem Auslass des Kompressors (1) verbunden ist, einem Verdampfer (17), welcher mit dem Kondensator (9) und dem Einlass (2) des Kompressors (1) verbunden ist, und einem Kühlmittelflusssteuerventil (12), welches zwischen dem Kondensator (9) und dem Verdampfer (17) vorgesehen ist, wobei das Steuerventil (12) keine Messöffnung aufweist, durch welche das Kühlmittel expandierbar ist, wobei das Steuerventil (12), wenn es vollständig geöffnet ist, lediglich seinen natürlichen Strömungswiderstand aufweist, wobei der Kondensator (9) ein Hochdruckkühlmittel dem Steuerventil (12) zuführt, wobei das Steuerventil (12) ein Magnetventil mit einem Magnetaktor aufweist, welcher, wenn er aktiviert (mit Energie beaufschlagt) wird, ein Ventilelement in seine offene Stellung bewegt, während der Aktor, wenn er deaktiviert (keine Beaufschlagung mit Energie) ist, dem Ventilelement erlaubt, in seine geschlossene Stellung zurückzukehren, wobei der Magnetaktor mittels eines geeigneten elektronischen Steuergeräts (21) periodisch aktiviert/deaktiviert wird, um den Fluss des Kühlmittels durch das Steuerventil (12) als Funktion der gewünschten Kühlmittelüberhitzung an dem Auslass des Verdampfers (17) zu steuern,
**dadurch gekennzeichnet,**
**dass** das Steuerventil (12) regelmäßig, alle N Sekunden, vollständig geöffnet (ON) wird und in dieser Konfiguration für eine variable Zeitspanne, "ON time", von 0 bis N Sekunden gehalten wird, um die gewünschte Überhitzung des Verdampfers (17) zu erreichen, wenn die Kühlanlage zum ersten Mal in Betrieb genommen wird, wobei die "ON time" im Wesentlichen auf ein Intervall von ungefähr 2 Sekunden festgelegt ist, wonach sie von dem Steuergerät (21) zum Steuern der Überhitzung, vorzugsweise mittels eines proportionalen, intergralen und/oder differentialen Steuerungsverfahrens, schrittweise erhöht oder verringert wird, während in dem Fall plötzlicher Veränderung der Betriebsbedingungen der Kühlanlage, welche während des Betriebs und/oder während des Befüllvorgangs mit dem Kühlmittel stattfindet, wenn die Überhitzung einen vorbestimmten Wert "maximum overheating" überschreitet, das Steuergerät (21) das Öffnen des Steuerventils sofort vorhersieht, wenn letzteres in der geschlossenen Konfiguration ist, wobei das Ventil (12) kein sonstiges Flussbegrenzungsmittel aufweist, wobei ein Teil des Flussmittels, welches dem Steuerventil (12) zugeführt wird, bereits in der Gasphase vorliegt, wenn das Ventil vollständig geöffnet ist, wobei ein erheblicher Anteil der Kühlmittelexpansion in einem Abschnitt einer Rohrleitung (15, 16) zwischen dem Kondensator (9) und dem Verdampfer (17) stattfindet.

2. Kühlanlage nach Anspruch 1, **dadurch gekennzeichnet, dass** das elektronische Steuergerät (21) die Signale analysiert und auswertet, welche von einem Drucksensor (4) und von einem Temperatursensor (5) bereitgestellt werden, die zwischen dem Auslass (19) des Verdampfers (17) und dem Einlass (2) des Kompressors (1) angeordnet sind.

3. Kühlanlage nach Anspruch 1 oder 2, **dadurch gekennzeichnet, dass** eine Heißgaskühlmittelflüssigkeitsleitung (7) zwischen dem Auslass (3) des Kompressors (1) und dem Einlass (18) des Verdampfers (17) vorgesehen ist, wobei die Rohrleitung (7), welche den Kondensator (9) und das Steuerventil (12) umgeht, von einem zusätzlichen Magnetventil oder einem Heißgasventil (8) zum Durchführen des Abtauens und des Heizens des Verdampfers (17) steuerbar ist.

4. Kühlanlage nach dem vorhergehenden Anspruch, **dadurch gekennzeichnet, dass** das Heißgasventil (8) während des Kühlbetriebs geschlossen bleibt (OFF), und das gewünschte Überhitzen des Verdampfers (17) aufrecht erhalten bleibt und mittels Deaktivieren (d.h. Schließen) und Aktivieren (d.h. Öffnen) des Steuermagnetventils (12) gesteuert wird.

5. Kühlanlage nach dem vorhergehenden Anspruch, **dadurch gekennzeichnet, dass** da das Steuerventil (12) keine Messöffnung aufweist, in den Fällen einer plötzlichen Veränderung der Betriebsbedingungen der Kühlanlage während des Betriebs und/oder während eines Füllvorgangs des Kühlmittels, wenn das Überhitzen unter einen vorbestimmten Wert "minimum overheating" unterschreitet, das elektronische Steuergerät (21) sofort das Steuerventil (8) schließt und das nachfolgende Öffnen des Ventils verzögert bis das Überhitzen den minimalen Überhitzungswert überschreitet.

6. Kühlanlage nach Anspruch 3, **dadurch gekennzeichnet, dass** um das Abtauen und das Erhitzen des Verdampfers (17) durchzuführen, das Steuerventil (12) geschlossen bleibt und das Heißgasventil (8) geöffnet ist, während der Kompressor (1) angeschaltet ist, wodurch dem Verdampfer (17) Heißgas zugeführt wird, ohne den Einlass (18) zu umgehen.

7. Kühlanlage nach einem der vorhergehenden Ansprüche, **dadurch gekennzeichnet, dass**, um zu Verhindern das Flüssigkeit zu dem Einlass (2) des Kompressors (1) zurückfließt, während des Abtauens und des Heizens das Steuergerät (21) den Wert des Überhitzens an dem Kompressor überwacht und, wenn das Überhitzen den vorbestimmten Wert unterschreitet, das Heißgasventil (8) schließt.

8. Kühlanlage nach einem der vorhergehenden Ansprüche, **dadurch gekennzeichnet, dass** das Kühlmittel ein HFC, wie beispielsweise R134a oder R404A oder R407A oder R410A oder R507A, aufweist.

## Revendications

1. Installation frigorifique comprenant un compresseur (1) ayant une entrée (2) et une sortie (3), un condensateur (9) relié à la sortie du compresseur (1), un évaporateur (17) relié au condensateur (9) et à l'entrée (2) du compresseur (1) et une soupape de régulation du débit de réfrigérant (12) prévue entre le condensateur (9) et l'évaporateur (17) ; ladite soupape de régulation (12) ne présente aucun orifice de dosage par lequel le fluide réfrigérant pourrait se détendre et, quand ladite soupape de régulation (12) est complètement ouverte, qu'elle ne possède que sa résistance naturelle à l'écoulement, ledit condensateur (9) délivre un fluide réfrigérant sous haute pression à la soupape de régulation (12) qui est constituée par une valve à solénoïde ayant un actionneur à solénoïde qui, lorsqu'il est activé (sous tension), déplace un élément formant soupape dans sa position ouverte tandis que, lorsque ledit actionneur est désactivé (hors tension), il permet à l'élément formant soupape de revenir en position fermée, ledit actionneur à solénoïde étant périodiquement activé/désactivé par un régulateur électronique approprié (21) afin de réguler le débit de réfrigérant traversant la soupape de régulation (12) en fonction de la surchauffe de réfrigérant souhaitée à la sortie de l'évaporateur (17), **caractérisée en ce que** ladite soupape de régulation (12) est complètement ouverte (ON/Activée) régulièrement, toutes les N secondes et maintenue dans cette configuration pendant une durée variable, désignée par "durée d'activation", de 0 à N secondes, afin d'obtenir la surchauffe souhaitée de l'évaporateur (17), quand l'installation est démarrée pour la première fois, la "durée d'activation" est initialement fixée à un intervalle d'environ deux secondes, après quoi elle est graduellement augmentée ou réduite par le régulateur (21) pour réguler la surchauffe, de préférence par un procédé de régulation proportionnel, intégral et/ou différentiel, tandis que, dans le cas de certains écarts brusques des conditions de fonctionnement de l'installation frigorifique se produisant pendant le fonctionnement et/ou pendant les opérations de remplissage de réfrigérant, lorsque la surchauffe augmente au-dessus d'une valeur prédéfinie de "surchauffe maximale", le régulateur (21) anticipe immédiatement l'ouverture de la soupape de régulation si cette dernière est en configuration fermée, ladite soupape (12) n'offrant aucun autre dispositif de limitation de débit; une partie du réfrigérant qui est délivré à ladite soupape de régulation (12) est déjà sous forme gazeuse quand ladite soupape est complètement ouverte, une partie notable de la détente du réfrigérant s'effectue dans une partie de conduite (15, 16) entre le condensateur (9) et l'évaporateur (17).

2. Installation frigorifique selon la revendication précédente, **caractérisée en ce que** ledit régulateur électronique (21) analyse et élabore les signaux provenant d'une sonde de pression (4) et d'une sonde de température (5) qui sont placées entre la sortie (19) de l'évaporateur (17) et l'entrée (2) du compresseur (1)

3. Installation frigorifique selon l'une des revendications précédentes, **caractérisée en ce qu'**une conduite de réfrigérant de gaz chaud (7) est prévue entre la sortie (3) du compresseur (1) et l'entrée (18) de l'évaporateur (17) ; ladite conduite (7), qui contourne le condensateur (9) et la soupape de régulation (12) étant régulée par une valve à solénoide supplémentaire ou une soupape de gaz chaud (8), afin d'exécuter le dégivrage et le chauffage de l'évaporateur (17).

4. Installation frigorifique selon la revendication précédente, **caractérisée en ce que** la soupape de gaz chaud (8) est maintenue fermée (OFF/Désactivée) pendant l'opération de réfrigération, et **en ce que** la surchauffe souhaitée de l'évaporateur (17) est maintenue et régulée en désarmant (c'est-à-dire en fermant) et en activant (c'est-à-dire en ouvrant) la valve à solénoïde de régulation (12).

5. Installation frigorifique selon la revendication précédente, **caractérisée en ce que**, étant donné que la soupape de régulation (12) ne possède pas d'orifice de dosage, dans le cas de certains écarts brusques des conditions opérationnelles de l'installation frigorifique se produisant pendant le fonctionnement et/ou pendant les opérations de remplissage de réfrigérant, lorsque la surchauffe descend au-dessous une valeur prédéfinie de "surchauffe minimale" le régulateur électronique (21) ferme immédiatement la soupape de régulation (8) et retarde l'ouverture suivante de la soupape jusqu'à ce que la surchauffe augmente au-delà de ladite valeur de surchauffe minimale.

6. Installation frigorifique selon la revendication 3, **caractérisée en ce que**, pour exécuter le dégivrage et le chauffage de l'évaporateur (17), la soupape de régulation (12) est maintenue fermée et la soupape de gaz chaud (8) est ouverte, alors que le compresseur (1) est activé, en délivrant ainsi du gaz chaud à l'évaporateur (17) sans contourner son entrée (18).

7. Installation frigorifique selon l'une des revendications précédentes, **caractérisée en ce que**, afin d'empêcher le liquide de revenir à l'entrée (2) du compresseur (1), pendant le dégivrage et le chauffage, le régulateur (21) surveille la valeur de la surchauffe au niveau du compresseur et, lorsque cette surchauffe descend au-dessous d'une valeur prédéfinie, il ferme la soupape de gaz chaud (8).

8. Installation frigorifique selon l'une des revendications précédentes, **caractérisée en ce que** ledit réfrigérant est un HFC tel le R134a, le R404A, le R407A, le R410A ou le R507A.
